# EUROPÄISCHE PATENTANMELDUNG

(11) **EP 2 782 167 A1**
(43) Veröffentlichungstag der Anmeldung: **24.09.2014**
(21) Anmeldenummer: 14157751.0
(22) Anmeldetag: 05.03.2014
(51) Int. Cl.: H01M 4/04, H01M 4/133, H01M 4/134, H01M 4/1393, H01M 4/1395, H01M 4/36, H01M 4/583, H01M 4/62, H01M 10/0525, H01M 4/587, H01M 4/02

(54) **Si/C-Komposite als Anodenmaterialien für Lithium-Ionen-Batterien**

(30) Priorität: 19.03.2013 DE 102013204799
(71) Anmelder: Wacker Chemie AG, 81737 München (DE)
(72) Erfinder: Troegel, Dennis, Dr., 82216 Maisach (DE); Amann, Manfred, Dr., 85235 Odelzhausen (DE); Haufe, Stefan, Dr., 85579 Neubiberg (DE); Pantelic, Jelena, 82110 Germering (DE)
(74) Vertreter: Killinger, Andreas

(57) **Zusammenfassung**

Gegenstand der Erfindung ist ein Verfahren zur Herstellung eines Si/C-Komposits, umfassend Bereitstellen eines Aktivmaterials enthaltend Silicium, Bereitstellen von Lignin, Inkontaktbringen des Aktivmaterials mit einem C-Precursor enthaltend Lignin, und Carbonisierung des Aktivmaterials durch Überführen von Lignin in anorganischen Kohlenstoff bei einer Temperatur von wenigstens 400°C in einer inerten Gasatmosphäre.

Weitere Gegenstände der Erfindung sind ein Si/C-Komposit, dessen Verwendung als Anodenmaterial in Lithium-Ionen-Batterien, ein Anodenmaterial für Lithium-Ionen-Batterien enthaltend ein solches Si/C-Komposit, ein Verfahren zur Herstellung einer Anode für eine Lithium-Ionen-Batterie, bei der ein solches Anodenmaterial zum Einsatz kommt, sowie eine Lithium-Ionen-Batterie, die eine Anode mit einem erfindungsgemäßen Anodenmaterial umfasst.

## Beschreibung

Die Erfindung betrifft ein Si/C-Komposit, ein Verfahren zu seiner Herstellung und dessen Verwendung als Anodenaktivmaterial in Lithium-Ionen-Batterien.

In Anoden für Lithium-Ionen-Batterien, in denen das Elektrodenaktivmaterial auf Silicium (als Material mit der höchsten bekannten Speicherkapazität für Lithium-Ionen; 4199 mAh/g) basiert, kann das Silicium beim Laden bzw. Entladen mit Lithium eine extreme Volumenänderung bis ca. 300% erfahren. Durch diese Volumenänderung kommt es zu einer starken mechanischen Beanspruchung des Aktivmaterials und der gesamten Elektrodenstruktur, die durch elektrochemisches Mahlen zu einem Verlust der elektrischen Kontaktierung und damit zur Zerstörung der Elektrode unter Kapazitätsverlust führt. Weiterhin reagiert die Oberfläche des eingesetzten Silicium-Anodenmaterials mit Bestandteilen des Elektrolyten unter kontinuierlicher Bildung passivierender Schutzschichten (Solid Electrolyte Interface; SEI), was zu einem irreversiblen Lithium-Verlust führt.

Um diese speziell für Si-basierte Anoden bekannten Probleme zu lösen, wurden in den letzten zehn Jahren verschiedene Ansätze zur elektrochemischen Stabilisierung Si-basierter Elektrodenaktivmaterialien verfolgt (Eine Übersicht geben A. J. Appleby et al., J. Power Sources 2007, 163, 1003-1039).

Eine mögliche Lösung besteht darin, das Silicium-basierte Aktivmaterial nicht in reiner Form, sondern als Komposit mit Kohlenstoff einzusetzen.

Graphit und strukturverwandte Kohlenstoffe sind relativ weich, elektrisch sehr gut leitfähig, besitzen eine geringe Masse und zeichnen sich durch eine geringe Volumenänderung beim Laden/Entladen aus. Aus diesen Gründen weisen Kohlenstoffbasierte Anoden bekanntermaßen eine sehr gute elektrochemische Stabilität auf. Durch Kombination der Vorteile der beiden Elemente (Si mit großer Kapazität, C mit hoher Stabilität) besitzen Si/C-basierte Elektrodenaktivmaterialien bei erhöhter Kapazität ein stabileres Zyklenverhalten als das reine Silicium.

Solche Si/C-Komposite können nach EP 1363341 A2 durch chemische Gasphasenabscheidung von Kohlenstoff auf Silicium hergestellt werden.

Ebenso ist es bekannt, diese durch reaktives Vermahlen von Silicium mit Kohlenstoff und anschließende Carbonisierung zu erzeugen, siehe z.B. US 20040137327 A1.

Auch Einbetten von Siliciumpartikeln in eine Matrix von C-haltigen Partikeln mit anschließender Carbonisierung führt zu Si/C-Kompositen, vgl. US 20050136330 A1. Zunächst werden sowohl die Si- als auch die C-haltigen Partikel beschichtet. Nach Einbettung der Si-Partikel erfolgt eine Beschichtung der Si/C-Komposite. Anschließend werden die beschichteten Si/C-Komposite einer Oxidationsreaktion ausgesetzt. Als Beschichtungsmaterial sind C-Precursoren bevorzugt, die mit einem Oxidationsmittel reagieren, und solche, die einen hohen Schmelzpunkt und eine hohe C-Ausbeute bei der Zersetzung aufweisen. Beispielhaft werden in US 20050136330 A1 schwere aromatische Ölrückstände, Pech aus chemischen Prozessen, Lignin aus der Zellstoffindustrie, Phenolharze, Kohlenhydrate wie Zucker und Polyacrylnitril genannt. Nachteile dieses Verfahrens bestehen vor allem in einer Verminderung der elektrochemischen Kapazität der so erhaltenen Si/C-Komposite aufgrund von partieller Deaktivierung des Siliciums. Durch die eingesetzte Oxidationsreaktion wird das enthaltene Silicium zum Teil in (elektrochemisch inaktive) Si-Oxide überführt, welche den Gehalt an aktivem Silicium und damit die Kapazität des Gesamt-Komposits herabsenken.

WO 2009155414 A1 offenbart ein Verfahren zur Herstellung von Metall-Kohlenstoff-Kompositen. Das Metall wird ausgewählt aus der Gruppe bestehend aus Sb, Li, Rb, Ti, V, Mn, Fe, Co, Ni, Cu, Zn, Zr, Mo, Ru, Rh, Pd, Ag, W, Ir, Pt, Au und deren Kombinationen. Der C-Precursor wird ausgewählt aus der Gruppe bestehend aus Lignin, Ammoniumderivaten von Lignin, Alkalimetall-Ligninsulfonat, Tannin, Tanninsulfonat, Asphalt, sulfoniertem Asphalt, Holz, Sägespänen, Rohrzucker, Laktose, Cellulose, Stärke, Polysaccharid, organischen Abfällen, Pech oder Teere aus Öl oder Kohle.

Als C-Precursoren kommen vor allem Kohlenwasserstoffe, Kohlenhydrate und eine Vielzahl von Polymeren in Betracht, die je nach ihrer Zusammensetzung und Struktur zu graphitisierbaren (Soft-Carbon) oder nicht-graphitisierbaren Kohlenstoffen (Hard-Carbon) führen.

Weiterhin sind C-Precursoren auf der Basis pflanzlicher Rohstoffe bekannt und beschrieben, die bereits einen eigenen Silicium-Gehalt aufweisen (mindestens 5 Gew.-% Si; z. B. Schilfrohr, Reishülsen, Seegras) und bei Carbonisierung zu porösen Kohlenstoffen mit Si-Gehalten von kleiner als 1 Gew.-% führen, vgl. US 20100069507 A1.

WO 2011006698 A1 offenbart ein Verfahren zur Herstellung eines nanostrukturierten Silicium-Kohlenstoff-Komposits, wobei eine mono- und/oder polyhydroxyaromatische Verbindung, ein Aldehyd und ein Katalysator umgesetzt und nanoskaliges Siliciumpulver zugegeben wird, und anschließend eine Carbonisierung stattfindet. Beim C-Precursor kann es sich um Katechol, Resorcinol, Phloroglucinol, Hydrochinon, Phenol oder ein Gemisch aus diesen Verbindungen handeln.

Dabei resultiert ein nanostrukturiertes Silicium-Kohlenstoff-Komposit, mit einer mittleren Partikelgröße von kleiner als 40 µm, mit einem Mesoporenvolumen von 0,005 bis 3 cm³/g, mit einem Kohlenstoffgehalt von 20 bis 99 Gew.-% und einem Anteil der anorganischen Phase von 1 bis 80 Gew.-%.

Nachteile des genannten Verfahrens liegen zum einen darin, dass die verwendeten mono- und/oder polyhydroxyaromatischen Ausgangsstoffe einen petrochemischen Ursprung haben und somit unter Gesichtspunkten der Nachhaltigkeit langfristig kritisch zu betrachten sind. Zum anderen besitzt das Herstellverfahren, nanoskaliges Siliciumpulver in eine organische Harz-Matrix einzupolymerisieren, einen erhöhten Zeit- und Energiebedarf, wogegen andere Verfahren ausgehend von bereits fertig polymerisierten Ausgangsstoffen diesen zusätzlichen zeitaufwand nicht mehr benötigen.

Vorteilhaft sind C-Precursoren, die in ihrer molekularen Struktur bereits aromatische Einheiten enthalten, hoch vernetzt sind und keine oder nur wenige Sauerstoff-haltige chemische Gruppen tragen, da diese durch Carbonisierung in hohen Ausbeuten zu mechanisch sehr stabilen Kohlenstoffen mit niedrigem Sauerstoff-Gehalt führen.

Damit können Si/C-Komposite erhalten werden, in denen das Silicium in einer gut vernetzten, mechanisch stabilen und leitfähigen Kohlenstoff-Matrix eingebettet vorliegt und eine Oxidation der Silicium-Oberfläche durch Sauerstoff weitestgehend minimiert ist. Obwohl beim Zyklisieren bzw. beim Lade-/Entladevorgang starke Volumenänderungen der Si-Partikel auftreten, bleibt bei einem solchen Komposit die Einbettung dieser Si-Partikel in der Kohlenstoffmatrix erhalten.

Aus dieser Problematik ergab sich die Aufgabenstellung der Erfindung.

Die Aufgabe der Erfindung wird gelöst durch ein Verfahren zur Herstellung eines Si/C-Komposits nach Anspruch 1 und durch ein Si/C-Komposit nach Anspruch 9 oder nach Anspruch 10.

Die Erfindung betrifft auch ein Anodenmaterial nach Anspruch 18, enthaltend ein solches Si/C-Komposit.

Die Aufgabe wird auch gelöst durch ein Verfahren zur Herstellung einer Anode für eine Lithium-Ionen-Batterie, bei der das Anodenmaterial nach Anspruch 18 zum Einsatz kommt.

Schließlich betrifft die Erfindung auch eine Lithium-Ionen-Batterie, die eine Anode mit einem Anodenmaterial nach Anspruch 18 umfasst.

Bevorzugte Ausführungsformen der beanspruchten Gegenstände finden sich in den abhängigen Ansprüchen.

Zur Herstellung eines Si/C-Komposits gemäß der vorliegenden Erfindung wird ein Silicium-basiertes Aktivmaterial eingesetzt.

Dieses kann elementares Silicium, ein Siliciumoxid oder eine Silicium/Metall-Legierung sein. Bevorzugt wird elementares Silicium eingesetzt, da dieses die größte Speicherkapazität für Lithium-Ionen aufweist.

Das Silicium-basierte Aktivmaterial wird bevorzugt in partikulärer Form eingesetzt, welches mikro- oder nanoskalig sein kann.

Besonders bevorzugt sind nanoskalige Si-Partikel mit einer durchschnittlichen Partikelgröße <500 nm, die kristallin oder amorph vorliegen können.

Neben Si-basierten, sphärischen Partikeln kann das Si-basierte Aktivmaterial auch linear mit Faserstruktur oder auch in Form von Si-haltigen Filmen oder Beschichtungen vorliegen.

Das Silicium-basierte Aktivmaterial kann aus hochreinem Polysilicium, gezielt dotiertem Silicium, aber auch metallurgischem Silicium bestehen, welches elementare Verunreinigung aufweisen kann.

Weiterhin kann es gezielt oder zufällig mit anderen Metallen und Elementen legiert in Form von Siliciden vorliegen, z.B. mit Li, Sn, Ca, Co, Ni, Cu, Cr, Ti, Al, Fe u.a. Diese Legierungen können binär, ternär oder multinär vorliegen.

Das eingesetzte Silicium-basierte Aktivmaterial kann auch prozessbedingt zufällig oder auch gezielt an der Oberfläche chemisch modifiziert sein. Typische Oberflächenfunktionalitäten können sein: Si-H, Si-Cl, Si-OH, Si-O-Alkyl, Si-O-Aryl, Si-Alkyl, Si-Aryl, Si-O-Silyl. Die angebundenen Oberflächengruppen können weiterhin funktionelle Gruppen enthalten und wahlweise monomer oder polymer sein. Sie können nur an einem oder mehreren Molekülketten an der Si-Oberfläche angebunden sein oder mehrere Si-Partikel miteinander verbrücken.

Neben dem Si-basierten Aktivmaterial können durchaus auch weitere Aktivmaterialien in den erfindungsgemäßen Si/C-Kompositmaterialien enthalten sein.

Diese können aus einer Kohlenstoffmodifikation bestehen (v.a. Graphit, Ruß, amorpher Kohlenstoff, pyrolytischer Kohlenstoff, Soft-Carbon, Hard-Carbon, Carbon Nanotubes (CNTs), Fullerene, Graphen) oder aus einem anderen Aktivmaterial, wie beispielsweise (Ausführungen nicht auf die genannten Beispiele beschränkt) Li, Sn, Mg, Ag, Co, Ni, Zn, Cu, Ti, B, Sb, Al, Pb, Ge, Bi, Seltene Erden oder Kombinationen aus ihnen. Zusätzlich können weitere Komponenten, basierend auf einem elektrochemisch inaktiven Material auf der Basis von Metallen (z. B. Kupfer), Oxiden, Carbiden oder Nitriden im Komposit enthalten sein.

Lignin ist ein makromolekulares hochverzweigtes Polyphenol mit einer komplexen Struktur analog Phenol-oder Resorcin-Formaldehyd-Harzen.

Im Sinne dieser Erfindung sind mit Lignin alle dreidimensionalen und amorphen polymeren Netzwerke aus den drei aromatischen Grundbausteinen para-Cumarylalkohol, Coniferylakohol und Sinapylalkohol gemeint, die in vielfältiger Form miteinander verknüpft sein können.

Natürliches Lignin ist Bestandteil vieler pflanzlicher Organismen und kann beispielsweise aus Nadelhölzern, Laubhölzern, Gräsern oder anderen pflanzlichen Rohstoffen gewonnen werden. Lignin kann auch chemisch aus entsprechenden Vorstufen synthetisiert worden sein.

Das Lignin aus pflanzlichen Rohstoffen kann durch Aufschlussverfahren aus Lignocellulose gewonnen werden.

Typische technische Aufschlussverfahren sind das Sulfatverfahren, das Sulfitverfahren, verschiedene Methoden der Holzverzuckerung oder Lösungsverfahren (Organo- bzw. Aquasolv-Verfahren), welche in zahlreichen Modifikationen ausgearbeitet sind.

Das Lignin kann in reiner Form, oder als Derivat, beispielsweise als Ligninsulfonat, oder als Metall-Ligninsulfonat eingesetzt werden.

Neben Lignin können auch weitere C-Precursoren, entweder in Mischung oder separat nacheinander in das Komposit eingebracht werden.

Diese möglichen Precursoren können sein (sind aber nicht limitiert auf die genannte Stoffgruppen): Elementarer Kohlenstoff (v.a. Ruße, Graphite, Kohlen, Kokse, Carbonfasern, Fullerene, Graphen u.a. ), einfache Kohlenwasserstoffe (z. B. Methan, Ethan, Ethylen, Acetylen, Propan, Propylen, Butan, Buten, Pentan, Isobutan, Hexan, Benzol, Toluol, Styrol, Ethylbenzol, Diphenylmethan, Naphthalin, Phenol, Cresol, Nitrobenzol, Chlorbenzol, Pyridin, Anthracen, Phenanthren u.a.), polyaromatische Kohlenwasserstoffe und -mischungen (v.a. Peche und Teere: Mesogenes Pech, Mesophasen-Pech, Petrolpech, Steinkohlenteerpech u.a.), organische Säuren (v.a. Citronensäure), Alkohole (v.a. Ethanol, Propanol, Furfurylalkohol u.a.), Kohlenhydrate (v.a. Glucose, Saccharose, Lactose, Cellulose, Stärke, u.a. Mono-, Oligo- und Polysaccharide), organische Polymere (v.a. Epoxyharze, Phenol-Formaldehyd-Harz, Resorcin-Formaldehyd-Harz, Polyethylen, Polystyrol, Polyvinylchlorid, Polyvinylidenchlorid, Polyvinylidenfluorid, Polytetrafluorethylen, Polyvinylacetat, Polyvinylalkohol, Polyethylenoxid, Polyacrylnitril, Polyanilin, Polybenzimidazol, Polydopamin, Polypyrrol, Poly-para-phenylen), Silicone.

Die C-Precursoren können in Mischung, in molekularer Verknüpfung (z. B. Co-Polymere) oder auch separat nebeneinander in der Kompositstruktur vorliegen.

Die Beschichtung des Silicium-basierten Aktivmaterials mit Lignin und ggf. anderen C-Precursoren sowie die Einbettung des Silicium-basierten Aktivmaterials in eine Lignin-haltige Matrix können auf verschiedenen Wegen erfolgen.

Das Silicium-basierte Aktivmaterial kann zusammen mit Lignin hochenergetisch vermahlen werden (trocken oder mit Wasser bzw. organischem Lösungsmittel) oder sonst in irgendeiner Form physikalisch vermischt werden.

Weiterhin kann das Silicium-basierte Aktivmaterial in eine Dispersion oder Lösung von Lignin dispergiert und durch anschließende Entfernung des Lösungsmittels mit Lignin beschichtet bzw. in Lignin eingebettet werden.

Dieses kann durch Entfernen des Lösungsmittels unter vermindertem Druck oder durch Fällung von Si/Lignin und anschließender Filtration sowie Zentrifugation bewerkstelligt werden.

Die Verfahren in flüssiger Phase sind zu bevorzugen, da hier die beste Verteilung von Silicium in Lignin erreicht werden kann.

Weiterhin kann das Silicium-basierte Aktivmaterial direkt in Lignin-Lösungen, wie sie beispielsweise im Organosolv-Verfahren anfallen, verarbeitet werden.

Die so erhaltenen Silicium/Lignin-Komposite können feucht oder getrocknet weiter umgesetzt werden.

Auch können die Zwischenstufen vor der weiteren Verarbeitung nachträglich vermahlen werden oder der Beschichtung/Einbettung mit weiteren C-Precursoren unterworfen werden.

Eine andere Möglichkeit besteht darin, Silicium-Nanopartikel aus der Gasphase über CVD- bzw. TVD-Prozesse auf Lignin oder C-Precursoren aus der Gasphase auf dem Si-basierten Aktivmaterial abzuscheiden.

Die Überführung von Lignin und ggf. anderen C-Precursoren in anorganischen Kohlenstoff zur Herstellung der erfindungsgemäßen Si/C-Komposite wird bevorzugt thermisch durch anaerobe Carbonisierung bewerkstelligt, wobei dieser Prozess beispielsweise in einem Rohrofen, Drehrohrofen oder einem Wirbelschichtreaktor stattfinden kann.

Die Wahl des Reaktortyps richtet sich bevorzugt danach, ob man die Carbonisierung statisch oder unter ständiger Durchmischung des Reaktionsmediums durchführen möchte.

Die Carbonisierung kann bei Temperaturen zwischen 400 und 1400 °C durchgeführt werden, bevorzugt bei 500-1000 °C und besonders bevorzugt bei 700-900 °C.

Die verwendete Atmosphäre besteht aus einem Inertgas wie Stickstoff oder Argon, vorzugsweise aus Argon, dem wahlweise auch weitere Anteile eines reduzierenden Gases wie Wasserstoff zugesetzt sein können.

Die Atmosphäre kann sich statisch über dem Reaktionsmedium befinden oder in Form eines Gasflusses über die Reaktionsmischung strömen.

Die dazu verwendeten Flussraten können (z. B. bei einem Reaktorvolumen von -2350 cm³) zwischen 0 ml und 1 L pro Minute betragen, bevorzugt 100-600 mL/min und besonders bevorzugt 200 mL/min.

Das Aufheizen der Reaktionsmischung kann mit unterschiedlichen Heizraten zwischen 1 und 20°C pro Minute durchgeführt werden, wobei bevorzugt Heizraten zwischen 1-10 °C/min und besonders bevorzugt 3-5 °C/min verwendet werden.

Weiterhin ist auch ein stufenweiser Carbonisierungsprozess mit verschiedenen Zwischentemperaturen und -heizraten möglich.

Nach Erreichen der Zieltemperatur wird die Reaktionsmischung eine gewisse zeit bei der Temperatur getempert oder sogleich abgekühlt.

Günstig sind Haltedauern von 30 min bis 24 h, bevorzugt 2-10 h und besonders bevorzugt 2-3 h.

Auch kann das Abkühlen aktiv oder passiv sowie gleichmäßig oder stufenweise durchgeführt werden.

Die so erhaltenen Si/C-Komposit-Pulver können direkt analytisch charakterisiert und in der weiteren Elektrodenpräparation eingesetzt werden oder vorher mechanisch, z.B. durch Mahlung oder Siebverfahren, nachbehandelt werden. Weiterhin ist es auch möglich, sie für weitere Oberflächenmodifikation, z.B. durch das Aufbringen weiterer C-Beschichtungen, einzusetzen.

Die erhaltenen Si/C-Komposit-Pulver können in Form isolierter Partikel, lockeren Agglomeraten oder festen Aggregaten anfallen.

Die Si/C-Partikel können sphärisch, splitterförmig oder auch linear in Form von Fasern bzw. als Faser-Knäuel vorliegen.

Die durchschnittliche Primärpartikelgröße der Komposite kann < 1 mm, bevorzugt < 20 µm und besonders bevorzugt < 10 µm sein.

Die Partikelgrößenverteilung kann monomodal, bimodal oder polymodal sein.

Der aus Lignin und ggf. anderen C-Precursoren erzeugte amorphe Kohlenstoff kann das Silicium-basierte Aktivmaterial in Form einer dünnen Schicht bedecken oder eine C-Matrix ausbilden, in welche das Silicium-basierte Aktivmaterial innen eingebettet ist oder außen an der Oberfläche vorliegt, sowie Kombinationen aus diesen Konfigurationsmöglichkeiten. Dabei kann die C-Matrix sehr dicht oder auch porös sein.

Sowohl das Silicium-basierte Aktivmaterial als auch der Kohlenstoff im Si/C-Komposit können kristallin oder amorph vorliegen sowie Mischungen aus kristallinen und amorphen Bestandteilen enthalten.

Die Si/C-Komposite können niedrige oder auch sehr hohe spezifische Oberflächen aufweisen (BET), die sich im Bereich von 0,1-400 m²/g bewegen können (im Rahmen dieser Erfindung bevorzugt 100-200 m²/g).

Die erfindungsmäßen Si/C-Komposite können in verschiedenen chemischen Zusammensetzungen vorliegen.

Allgemein können die Si/C-Komposite Si-Gehalte von 10-90 Gew.-%, C-Gehalte von 10-90 Gew.-%, O-Gehalte von 0-20 Gew.-% und N-Gehalte von 0-10 Gew.-% aufweisen. Bevorzugt sind Zusammensetzungen aus 20-50 Gew.-% Si, 50-80 Gew.-% C, 0-10 Gew.-% O und 0-10 Gew.-% N. Besonders bevorzugt sind Zusammensetzungen aus 20-40 Gew.-% Si, 60-80 Gew.-% C, 0-5 Gew.-% O und 0-5 Gew.-% N. Die Kohlenstoff-Anteile können sich, je nach Komposit-Zusammensetzung, auf reinen, durch Carbonisierung erhaltenen amorphen Kohlenstoff, Leitruß, Graphit, Carbon Nanotubes (CNTs) oder andere Kohlenstoffmodifikationen verteilen.

Neben den genannten Hauptbestandteilen können auch weitere chemische Elemente in Form eines gezielten Zusatzes oder zufälliger Verunreinigung enthalten sein: Li, Fe, Al, Cu, Ca, K, Na, S, Cl, Zr, Ti, Pt, Ni, Cr, Sn, Mg, Ag, Co, Zn, B, Sb; deren Gehalte sind bevorzugt < 1 Gew.-% und besonders bevorzugt < 100 ppm.

Ein weiterer Gegenstand der vorliegenden Erfindung ist die Verwendung der erfindungsgemäßen Si-Komposite als Elektrodenmaterial für Lithiumionenbatterien.

Die erfindungsgemäßen Elektrodenmaterialien werden vorzugsweise zur Herstellung der negativen Elektrode einer Lithium-Ionen-Batterie verwendet.

Hierbei werden die erfindungsgemäßen Elektrodenmaterialien mit weiteren Komponenten und ggf. einem Lösungsmittel, wie Wasser, Hexan, Toluol, Tetrahydrofuran, N-Methyl-pyrrolidon, N-Ethylpyrrolidon, Aceton, Ethylacetat, Dimethylsulfoxid, Dimethylacetamid oder Ethanol, oder Lösungsmittelgemischen zu einer Elektrodentinte bzw. -paste verarbeitet.

Die Materialverarbeitung kann beispielsweise mit Rotor-Stator-Maschinen, Hochenergiemühlen, Planetenkneter, Rührwerkskugelmühlen, Rüttelplatten oder Ultraschallgeräten erfolgen.

Unter weiteren Komponenten sind speicherfähige Materialien, wie z. B. Graphit oder Lithium, polymere Bindemittel oder - gemische, leitfähige Materialien, wie Leitruß, Kohlenstoffnanoröhren (CNT) oder Metallpulver, und weitere Hilfsstoffe, wie Dispergiermittel oder Porenbildner, zu verstehen. Mögliche Bindemittel sind Polyvinylidenfluorid, Polytetrafluorethylen, Polyolefine, oder thermoplastische Elastomere, insbesondere Ethylen/Propylen-Dien-Terpolymere.

In einer besonderen Ausführungsform handelt es sich um modifizierte Zellulose als Bindemittel.

Der Feststoffgehalt in der Tinte bzw. Paste liegt zwischen 5 Gew.-% und 95 Gew.-%, besonders bevorzugt zwischen 10 Gew.-% und 50 Gew.-%.

Die Elektrodentinte oder -paste mit den erfindungsgemäßen Kompositmaterialien wird in einer Trockenschichtdicke von 2 µm bis 500 µm, bevorzugt von 10 µm bis 300 µm auf eine Kupferfolie oder einen anderen Stromsammler aufgerakelt werden.

Andere Beschichtungsverfahren, wie Rotationsbeschichtung (Spin-Coating), Tauchbeschichtung, Streichen, oder Sprühen, können ebenso verwendet werden.

Vor dem Beschichten der Kupferfolie mit dem erfindungsgemäßen Elektrodenmaterial kann eine Behandlung der Kupferfolie mit einem handelsüblichen Primer, z.B. auf der Basis von Polymerharzen erfolgen. Er erhöht die Haftung auf dem Kupfer, besitzt aber selbst praktisch keine elektrochemische Aktivität.

Die Elektrodenbeschichtung wird bis zur Gewichtskonstanz getrocknet.

Die Trocknungstemperatur richtet sich nach den eingesetzten Materialien und dem verwendeten Lösungsmittel.

Sie liegt zwischen 20° C und 300° C, besonders bevorzugt zwischen 50° C und 150° C.

Der Anteil des erfindungsgemäßen Kompositmaterials bezogen auf das Trockengewicht der Elektrodenbeschichtung beträgt zwischen 5 Gew.-% und 98 Gew.-%, besonders bevorzugt zwischen 60 Gew.-% und 95 Gew.-%.

Ein weiterer Gegenstand der vorliegenden Erfindung ist eine Lithium-Ionen-Batterie mit einer ersten Elektrode als Kathode, mit einer zweiten Elektrode als Anode, mit einer zwischen beiden Elektroden angeordneten Membran als Separator, mit zwei Anschlüssen an den Elektroden, mit einem die genannten Teile aufnehmendes Gehäuse und mit einem Lithium-Ionen enthaltenden Elektrolyten, mit dem die beiden Elektroden getränkt sind, wobei ein Teil der zweiten Elektrode das erfindungsgemäße Sihaltige Kompositmaterial enthält.

Als Kathodenmaterial können Lithiumcobaltoxid, Lithiumnickeloxid, Lithiumnickelcobaltoxid (dotiert und nicht dotiert), Lithiummanganoxid (Spinell), Lithium nickel cobalt manganoxide, Lithiumnickelmanganoxide, Lithiumeisenphosphat, Lithiumcobaltphosphat, Lithiummanganphosphat, Lithiumvanadiumphosphat, oder Lithiumvanadiumoxide eingesetzt werden.

Der Separator ist eine nur für Ionen durchlässige Membran, wie sie in der Batterieherstellung bekannt ist. Der Separator trennt die erste Elektrode von der zweiten Elektrode.

Der Elektrolyt ist eine Lösung eines Lithiumsalzes (= Leitsalz) in einem aprotonischen Lösungsmittel. Einsetzbare Leitsalze sind zum Beispiel Lithiumhexafluorophosphat, Lithiumhexafluoroarsenat, Lithiumperchlorat, Lithiumtetrafluoroborat, LiCF₃SO₃, LiN(CF₃SO₂) oder Lithiumborate.

Die Konzentration des Leitsalzes beträgt vorzugsweise von 0,5 mol/l bis zur Löslichkeitsgrenze des entsprechenden Salzes, bevorzugt jedoch 1 mol/l.

Als Lösungsmittel können cyclische Carbonate, Propylencarbonat, Ethylencarbonat, Dimethylcarbonat, Diethylcarbonat, Ethylmethylcarbonat, Dimethoxyethan, Diethoxyethan, Tetrahydrofuran, 2-Methyltetrahydrofuran, gamma-Butyrolacton, Dioxolan, Acetonitril, org. Kohlensäureester oder Nitrile, einzeln oder als Mischungen daraus, eingesetzt werden.

Noch bevorzugter enthält der Elektrolyt einen Filmbildner, wie Vinylencarbonat, Fluorethylencarbonat, etc., wodurch eine signifikante Verbesserung der Zyklenfestigkeit der Si-Kompositelektrode erreicht werden kann. Dies wird hauptsächlich der Bildung einer festen Elektrolytzwischenphase auf der Oberfläche von aktiven Partikeln zugeschrieben.

Der Anteil des Filmbildners im Elektrolyten kann zwischen 0,1 Gew.-% und 20,0 Gew.-% betragen, bevorzugt zwischen 0,2 Gew.-% und 15,0 Gew.-%, noch bevorzugter zwischen 0,5 Gew.-% und 10 Gew.-%.

Neben den oben beschriebenen flüssigen Elektrolyt-Systemen können weiterhin auch Fest- oder Gelelektrolyte verwendet werden, die eine feste Phase von z. B. Polyvinylidenfluorid, Hexafluorpropylen, Polyvinylidenfluorid-Hexafluorpropylen-Copolymer, Polyacrylnitril, Polymethylmethacrylat oder Polyethylenoxid beinhalten, sowie Mischungen dieser Festelektrolyte mit den oben genannten flüssigen Elektrolyt-Phasen.

Die erfindungsgemäße Lithiumionenbatterie kann in allen üblichen Formen in gewickelter, gefalteter oder gestapelter Form hergestellt werden.

Alle zur Herstellung der erfindungsgemäßen Lithiumionenbatterie, wie oben beschrieben, benutzten Stoffe und Materialien sind bekannt.

Die Herstellung der Teile der erfindungsgemäßen Batterie und ihre Zusammenfügung zur erfindungsgemäßen Batterie erfolgt nach den auf dem Gebiet der Batterieherstellung bekannten Verfahren.

Im Folgenden wird die Erfindung anhand von Beispielen veranschaulicht.

### Beispiele

Sofern nicht anders angegeben, wurden die nachstehenden Beispiele in einer Atmosphäre aus trockenem Argon 5.0, und bei einem Druck der umgebenden Atmosphäre, also etwa 1013 mbar sowie bei Raumtemperatur, also bei etwa 23 °C durchgeführt.

Die für die Synthesen verwendeten Lösungsmittel wurden nach Standardverfahren getrocknet und unter einer trockenen ArgonAtmosphäre aufbewahrt.

Die folgenden Methoden und Materialien wurden in den Beispielen verwendet:

### Carbonisierung:

Alle in den Beispielen durchgeführten Carbonisierungen wurden mit einem 1200 °C Drei-Zonen Rohrofen (TFZ 12/65/550/E301) der Fa. Carbolite GmbH unter Verwendung einer Kaskadenregelung inklusive eines Probenthermoelements Typ N durchgeführt.

Die angegebenen Temperaturen beziehen sich auf die Innentemperatur des Rohrofens am Ort des Thermoelements.

Das jeweils zu carbonisierende Ausgangsmaterial wurde in ein oder mehrere Verbrennungsschiffchen aus Quarzglas (QCS GmbH) eingewogen und in ein Arbeitsrohr aus Quarzglas (Durchmesser 6 cm; Länge 83 cm) eingebracht.

Die für die Carbonisierungen verwendeten Einstellungen und Prozessparameter sind in den jeweiligen Beispielen angegeben.

### Mechanische Nachbehandlung/Mahlung:

Die nach der Carbonisierung erhaltenen Si/C-Pulver wurden durch Mahlung mit einer Planetenkugelmühle PM1000 der Fa. Retsch nachträglich weiter zerkleinert.

Dazu wurde das Si/C-Pulver in einen 50 ml-Mahlbecher (Spezialstahl oder Zirkonoxid) zusammen mit Mahlkugeln (Spezialstahl oder Zirkonoxid; 10 oder 20 mm Durchmesser) eingebracht und bei voreingestellter Drehzahl (200 oder 300 rpm) eine definierte Zeitdauer vermahlen.

Folgende analytische Methoden und Geräte wurden zur Charakterisierung der erhaltenen Si/C-Komposit eingesetzt:

### Rasterelektronemikroskopie/energiedisperse Röntgenspektrometrie (REM/EDX):

Die mikroskopischen Untersuchungen wurden mit einem Rasterelektronemikroskop Zeiss Ultra 55 und einem energiedispersvem Röntgenspektrometer INCA x-sight durchgeführt.

Die Proben wurden vor der Untersuchung zur Verhinderung von Aufladungsphänomenen mit einem Baltec SCD500 Sputter-/Carbon-Coating mit Kohlenstoff bedampft.

### Anorganische Analytik / Elementaranalyse:

Die in den Beispielen angegebenen C- und ggf. S-Gehalte wurden mit einem Leco CS 230 Analysator ermittelt, zur Bestimmung von O- und ggf. N- bzw. H-Gehalten wurde ein Leco TCH-600 Analysator eingesetzt.

Die qualitative und quantitative Bestimmung von anderen angebenen Elementen in den erhaltenene Si/C-Kompositen wurde nach einem Aufschluss mit HNO₃/HF mittels induktiv-gekoppelter Plasma (ICP)-Emissionsspektroskopie mit dem Gerät Perkin Elmer Optima 7300 DV durchgeführt.

Die wahlweise angegebenen Chlor-Gehalte wurden mittels Ionenchromatographie bestimmt.

### Partikelgrößenbestimmung:

Die Bestimmung der in den Beispielen angegebenen Partikelgrößenverteilung wurde mittels statischer Laserlichtstreuung an einem Gerät LA-950 der Fa. Horiba durchgeführt.

Die Si/C-Komposite wurden dazu in Wasser unter Zusatz von Octylphenoxypolyethoxyethanol (IGEPAL) dispergiert.

### Spezifische Oberfläche nach BET:

Die Bestimmung der spezifischen Oberfläche der erhaltenen Si/C-Komposite wurden mit dem Gerät Sorptomatic 1990 der Fa. Thermo Fisher Scientific Inc. nach der BET-Methode durchgeführt.

### Thermogravimetrie (TGA):

Das Verhältnis verschiedener Kohlenstoff-Modifikationen in einem Komposit (vor allem Graphit (G) neben amorphem Kohlenstoff (a-C)) wurde mittels Thermogravimetrie mit einer Mettler Thermowaage TGA 851 ermittelt.

Die Messung wurde unter Sauerstoff als Messgas im Temperaturbereich von 25-1000 °C und einer Heizrate von 10 °C/min durchgeführt.

Bei Anwesenheit von G und a-C findet der durch Verbrennung des Gesamtkohlenstoffs verursachte Massenverlust im Temperaturbereich von 400-800 °C in zwei Stufen statt, aus deren Verhältnis das in den betreffenden Beispielen angegebene a-C:G-Verhältnis ermittelt wurde.

### Verwendete Materialien:

Folgende Materialien wurden aus kommerziellen Quellen bezogen bzw. selber synthetisiert und ohne weitere Reinigung direkt eingesetzt:
Silicium-Nanopulver (20-30 nm; Nanostructured & Amorphous Materials),
Silicium-Nanopulver-Dispersion (23 Gew.-% in Ethanol, D₅₀ = 180 nm)
Graphit KS6L-C (Timcal),
Carbon Nanotubes (Baytubes C70P; Bayer Material Science),
Polyacrylnitril (Sigma Aldrich),
Dimethylsulfoxid (Acros Organics),
Natriumdodecylsulfat (SDS; Sigma Aldrich).

Lignin wurde als wässrig-organische Lösung in einem Organosolv-Verfahren aus Buchenhackschnitzeln hergestellt.

Der Aufschluss (180 °C, 4 h) erfolgte in 50%iger (v/v) wässrig-ethanolischer Lösung mit einem Flottenverhältnis von 4:1 (Lösungsmittel: Hackschnitzel).

Die Lignin-Lösung wurde von der Faserfraktion durch Filtration abgetrennt.

Die erhaltene dunkelbraune Lignin-Lösung zeigte einen Feststoffgehalt von 4-7 Gew.-%.

Alternativ wurde der entsprechende Aufschluss (170 °C / 2 h) in 50%iger (v/v) wässrig-ethanolischer Lösung mit zusätzlich 1 Gew-% H₂SO₄ durchgeführt.

Sofern nicht anders angegeben, wurde in den nachfolgenden Beispielen die H₂SO₄-freie Lignin-Lösung eingesetzt.

### Beispiel 1

1,50 g Silicium-Nanopulver (20-30 nm; Nanostructured & Amorphous Materials) wurden zu 150 ml Lignin-Lösung (7 Gew.-%, in H₂O/EtOH) gegeben und 1 h im Ultraschallbad behandelt. Die flüchtigen Bestandteile wurden unter vermindertem Druck entfernt, und der braune Rückstand wurde in zwei Quarzglasschiffchen aufgeteilt und im Rohrofen unter Argon carbonisiert: Heizrate 10 °C/min, Temperatur 800 °C, Haltedauer 2 h, Ar-Flussrate 200 ml/min. Nach dem Abkühlen wurden 4,70 g eines schwarzen, pulverigen Feststoffs erhalten (Carbonisierungsausbeute 36%). Das Produkt wurde in der Planetenkugelmühle nachträglich vermahlen: Mahlbecher und - kugeln aus Spezialstahl; 1. Mahlung: 3 Kugeln (20 mm), 200 rpm, 1 h; 2. Mahlung: 12 Kugeln (10 mm), 200 rpm, 1 h.

Elementare Zusammensetzung: Si 27 Gew.-%, C 56 Gew.-%, O 15 Gew.-%, Li <10 ppm, Fe 0,34 Gew.-%, Al <10 ppm, Cu <10 ppm, Ca 0,31 Gew,-%, K 0,60 Gew.-%, Na 250 ppm, S <0,1 Gew.-%.

Partikelgrößenverteilung: Monomodal; D10: 3,83 µm, D50: 6,87 µm, D90: 10,7 µm.

Spezifische Oberfläche (BET) : 106 m²/g.

### Beispiel 2

2,00 g Silicium-Nanopulver (20-30 nm; Nanostructured & Amorphous Materials) wurden zu 200 ml Lignin-Lösung (7 Gew.-%, in H₂O/EtOH) gegeben, und die resultierende Dispersion wurde 10 min mit Ultraschall behandelt. Wasser (200 ml), welches zuvor mittels Durchleiten von Argon von gelöstem Sauerstoff befreit wurde, wurde tropfenweise unter Rühren zu der Dispersion gegeben. Das ausgefällte Si/Lignin-Komposit wurde durch Filtration abgetrennt, mehrmals mit Wasser gewaschen und bei 60 °C unter vermindertem Druck getrocknet (3,5 h). Der braune Rückstand wurde in zwei Quarzglasschiffchen aufgeteilt und im Rohrofen unter Argon carbonisiert: Heizrate 10 °C/min, Temperatur 800 °C, Haltedauer 2 h, Ar-Flussrate 200 ml/min. Nach dem Abkühlen wurden 3,95 g eines schwarzen, pulverigen Feststoffs erhalten (Carbonisierungsausbeute 57%). Das Produkt wurde in der Planetenkugelmühle nachträglich vermahlen: Mahlbecher und -kugeln aus Spezialstahl; 3 Kugeln (20 mm), 200 rpm, 2 h.

Elementare Zusammensetzung: Si 44 Gew.-%, C 48 Gew.-%, O 7 Gew.-%, Li <10 ppm, Fe 0,10 Gew.-%, Al 120 ppm, Cu <10 ppm, Ca 32 ppm, K 21 ppm, Na 46 ppm, S <0,1 Gew.-%.

Partikelgrößenverteilung: Monomodal; D10: 0,65 µm, D50: 7,09 µm, D90: 14,2 µm.

Spezifische Oberfläche (BET): 254 m²/g.

### Beispiel 3

4,00 g Silicium-Nanopulver (20-30 nm; Nanostructured & Amorphous Materials) wurden zu 400 ml Lignin-Lösung (7 Gew.-%, in H₂O/EtOH) gegeben, und die resultierende Dispersion wurde 10 min mit Ultraschall behandelt. Wasser (400 ml), welches zuvor mittels Durchleiten von Argon von gelöstem Sauerstoff befreit wurde, wurde tropfenweise unter Rühren zu der Dispersion gegeben. Das ausgefällte Si/Lignin-Komposit wurde durch Filtration abgetrennt, mehrmals mit Wasser gewaschen und bei 60 °C unter vermindertem Druck getrocknet (4,5 h). Der braune Rückstand wurde in zwei Quarzglasschiffchen aufgeteilt und im Rohrofen unter Argon in zwei Stufen carbonisiert:
1) Heizrate 2 °C/min, Temperatur 300 °C, Haltedauer 2 h, Ar-Flussrate 200 ml/min. Carbonisierungsausbeute Stufe 1: 70%.
2) Heizrate 10 °C/min, Temperatur 800 °C, Haltedauer 2 h, Ar-Flussrate 200 ml/min. Carbonisierungsaubeute Stufe 2: 89%.

Nach dem Abkühlen wurden 6,25 g eines schwarzen, pulverigen Feststoffs erhalten (Carbonisierungsgesamtausbeute 63%). Das Produkt wurde in der Planetenkugelmühle nachträglich vermahlen: Mahlbecher und -kugeln aus Spezialstahl; 3 Kugeln (20 mm), 200 rpm, 3 h.

Elementare Zusammensetzung: Si 53 Gew.-%, C 41 Gew.-%, O 5 Gew.-%, Li <10 ppm, Fe 143 ppm, Al 48 ppm, Cu <10 ppm, Ca 70 ppm, K 98 ppm, Na 110 ppm, S <0,1 Gew.-%.

Partikelgrößenverteilung: Monomodal; D10: 0,75 µm, D50: 2,54 µm, D90: 5,56 µm.

Spezifische Oberfläche (BET): 201 m²/g.

### Beispiel 4

2,00 g Silicium-Nanopulver (20-30 nm; Nanostructured & Amorphous Materials) und 3 g Graphit (Timcal) wurden zu 180 ml Lignin-Lösung (7 Gew.-%, in H₂O/EtOH) gegeben, und die resultierende Dispersion wurde 15 min mit Ultraschall behandelt. Wasser (180 ml), welches zuvor mittels Durchleiten von Argon von gelöstem Sauerstoff befreit wurde, wurde tropfenweise unter Rühren zu der Dispersion gegeben. Das ausgefällte Si/Graphit/Lignin-Komposit wurde durch Filtration abgetrennt, mehrmals mit Wasser gewaschen und bei 60 °C unter vermindertem Druck getrocknet (4 h). Der schwarz-braune Rückstand wurde in ein Quarzglasschiffchen gegeben und im Rohrofen unter Argon carbonisiert: Zuerst Heizrate 2 °C/min, Temperatur 300 °C, Haltedauer 2 h, Ar-Flussrate 200 ml/min; danach direkt weiter mit Heizrate 10 °C/min, Temperatur 800 °C, Haltedauer 2 h, Ar-Flussrate 200 ml/min. Nach dem Abkühlen wurden 6,00 g eines schwarzen, pulverigen Feststoffs erhalten (Carbonisierungsausbeute 76%). Das Produkt wurde händisch mit einem Mörser zerkleinert.

Elementare Zusammensetzung: Si 30 Gew.-%, C 66 Gew.-% (G 44 Gew.-%; a-C 22 Gew.-%), O 3 Gew.-%, Li <10 ppm, Fe 15 ppm, Al 17 ppm, Cu <10 ppm, Ca 17 ppm, K 19 ppm, Na 20 ppm, S <0,1 Gew.-%.

Partikelgrößenverteilung: Monomodal; D10: 3,04 µm, D50: 5,31 µm, D90: 8,72 µm.

Spezifische Oberfläche (BET): 101 m²/g.

### Beispiel 5

18,0 g Silicium-Nanopulver-Dispersion (23 Gew.-% in Ethanol, D₅₀ = 180 nm) und 400 ml Lignin-Lösung (7 Gew.-%, in H₂O/EtOH) wurden miteinander unter Rühren vermischt. Wasser (450 ml), welches zuvor mittels Durchleiten von Argon von gelöstem Sauerstoff befreit wurde, wurde tropfenweise unter Rühren zu der Dispersion gegeben. Das ausgefällte Si/Lignin-Komposit wurde durch Filtration abgetrennt, mehrmals mit Wasser gewaschen und bei 60 °C unter vermindertem Druck getrocknet (4,5 h). Der braune Rückstand wurde in zwei Quarzglasschiffchen aufgeteilt und im Rohrofen unter Argon carbonisiert: Zuerst Heizrate 3 °C/min, Temperatur 300 °C, Haltedauer 1 h, Ar-Flussrate 200 ml/min; danach direkt weiter mit Heizrate 10 °C/min, Temperatur 800 °C, Haltedauer 2 h, Ar-Flussrate 200 ml/min. Nach dem Abkühlen wurden 5,04 g eines schwarzen, pulverigen Feststoffs erhalten (Carbonisierungsausbeute 49%). Das Produkt wurde zunächst händisch mit einem Mörser zerkleinert und anschließend in der Planetenkugelmühle nachträglich vermahlen: Mahlbecher und -kugeln aus Spezialstahl; 3 Kugeln (20 mm), 200 rpm, 2 h.

Elementare Zusammensetzung: Si 48 Gew.-%, C 43 Gew.-%, O 8 Gew.-%, N 0,2 Gew.-%, H 0,5 Gew.-%, Li <10 ppm, Fe 440 ppm, Al <100 ppm, Cu <10 ppm, Ca 240 ppm, K 34 ppm.

Partikelgrößenverteilung: Monomodal; D10: 0,62 µm, D50: 2,56 µm, D90: 5,53 µm.

Spezifische Oberfläche (BET): 206 m²/g.

### Beispiel 6

1,70 g Silicium-Nanopulver (20-30 nm; Nanostructured & Amorphous Materials) und 2,60 g Carbon Nanotubes wurden zu 155 ml Lignin-Lösung (7 Gew.-%, in H₂O/EtOH) gegeben, und die resultierende Dispersion wurde zunächst mit einer Spatelspitze Natriumdodecylsulfat (SDS) versetzt und anschließend 25 min mit Ultraschall behandelt. Wasser (200 ml), welches zuvor mittels Durchleiten von Argon von gelöstem Sauerstoff befreit wurde, wurde tropfenweise unter Rühren zu der Dispersion gegeben. Das ausgefällte Si/CNT/Lignin-Komposit wurde durch Filtration abgetrennt, mehrmals mit Wasser gewaschen und bei 60 °C unter vermindertem Druck getrocknet (4,5 h). Der schwarz-braune Rückstand wurde in ein Quarzglasschiffchen gegeben und im Rohrofen unter Argon carbonisiert: Zuerst Heizrate 2 °C/min, Temperatur 300 °C, Haltedauer 2 h, Ar-Flussrate 200 ml/min; danach direkt weiter mit Heizrate 10 °C/min, Temperatur 800 °C, Haltedauer 2 h, Ar-Flussrate 200 ml/min. Nach dem Abkühlen wurden 5,72 g eines schwarzen, pulverigen Feststoffs erhalten (Carbonisierungsausbeute 25%). Das Produkt wurde in der Planetenkugelmühle nachträglich vermahlen: Mahlbecher und - kugeln aus Zirkonoxid; 3 Kugeln (20 mm), 300 rpm, 2 h.

Elementare Zusammensetzung: Si 29 Gew.-%, C 54 Gew.-% (CNT 44 Gew.-%; a-C 10 Gew.-%), O 17 Gew.-%, Li <10 ppm, Fe 20 ppm, Al 0,13 Gew.-%, Cu 15 ppm, Ca 130 ppm, K 70 ppm, Zr 40 ppm, S <0,1 Gew.-%.

Partikelgrößenverteilung: Bimodal; D10: 0,14 µm, D50: 0,45 µm, D90: 2,19 µm.

Spezifische Oberfläche (BET): 231 m²/g.

### Beispiel 7

### a)

4,00 g Silicium-Nanopulver (20-30 nm; Nanostructured & Amorphous Materials) wurden zu 400 ml Lignin-Lösung (7 Gew.-%, in H₂O/EtOH) gegeben, und die resultierende Dispersion wurde 15 min mit Ultraschall behandelt. Wasser (400 ml), welches zuvor mittels Durchleiten von Argon von gelöstem Sauerstoff befreit wurde, wurde tropfenweise unter Rühren zu der Dispersion gegeben. Das ausgefällte Si/Lignin-Komposit wurde durch Filtration abgetrennt, mehrmals mit Wasser gewaschen und bei 60 °C unter vermindertem Druck getrocknet (4,5 h). Der braune Rückstand wurde in ein Quarzglasschiffchen gegeben und im Rohrofen unter Argon carbonisiert: Zuerst Heizrate 3 °C/min, Temperatur 300 °C, Haltedauer 2 h, Ar-Flussrate 200 ml/min; danach direkt weiter mit Heizrate 10 °C/min, Temperatur 800 °C, Haltedauer 2 h, Ar-Flussrate 200 ml/min. Nach dem Abkühlen wurden 6,33 g eines schwarzen, pulverigen Feststoffs erhalten (Carbonisierungsausbeute 51%). Das Produkt wurde in der Planetenkugelmühle nachträglich vermahlen: Mahlbecher und - kugeln aus Spezialstahl; 12 Kugeln (10 mm), 200 rpm, 2 h. Partikelgrößenverteilung: Bimodal; D10: 0,14 µm, D50: 0,91 µm, D90: 5,75 µm.

### b)

4,00 g Polyacrylnitril (PAN) wurden in 60 ml wasserfreiem Dimethylsulfoxid durch Rühren bei Raumtemperatur gelöst. Das in a) hergestellte Si/C-Komposit (6,05 g) wurde unter Rühren in die PAN-Lösung gegeben, und die resultierende Dispersion wurde 1 h im Ultraschallbad behandelt. Die flüchtigen Bestandteile wurden bei 80-90 °C unter vermindertem Druck entfernt. Der gummiartige Rückstand wurde zerkleinert, auf zwei Quarzglasschiffchen aufgeteilt und im Rohrofen unter Argon carbonisiert: Zuerst Heizrate 3 °C/min, Temperatur 280 °C, Haltedauer 1,5 h, Ar-Flussrate 200 ml/min; danach direkt weiter mit Heizrate 10 °C/min, Temperatur 800 °C, Haltedauer 2 h, Ar-Flussrate 200 ml/min. Nach dem Abkühlen wurden 7,29 g eines schwarzen, pulverigen Feststoffs erhalten (Carbonisierungsausbeute 72%). Das Produkt wurde in der Planetenkugelmühle nachträglich vermahlen: Mahlbecher und - kugeln aus Zirkonoxid; 3 Kugeln (20 mm), 300 rpm, 2 h.

Elementare Zusammensetzung: Si 38 Gew.-%, C 51 Gew.-%, O 7 Gew.-%, N 4 Gew.-%, Li <10 ppm, Fe 670 ppm, Al 61 ppm, Cu 35 ppm, Ca 90 ppm, K 54 ppm, Zr 400 ppm.

Partikelgrößenverteilung: Monomodal; D10: 1,24 µm, D50: 4,34 µm, D90: 8,61 µm.

Spezifische Oberfläche (BET): 105 m²/g.

### Beispiel 8

1,18 g des Kompositmaterials nach Beispiel 4 und 0,18 g Leitruß (Timcal, Super P Li) wurden in 11,4 g einer 1,0 Gew.-%igen Lösung von Natrium-Carboxymethylcellulose (Daicel, Grade 1380) in Wasser mittels Dissolver bei einer Umlaufgeschwindigkeit von 12 m/s dispergiert. Nach Entgasen wurde die Dispersion mittels eines Filmziehrahmens mit 0,25 mm Spalthöhe (Erichsen, Modell 360) auf eine Kupferfolie (Schlenk Metallfolien, SE-Cu58) mit Dicke von 0,030 mm aufgebracht. Die so hergestellte Elektrodenbeschichtung wurde anschließend 60 min bei 80 °C getrocknet. Das mittlere Flächengewicht der Elektrodenbeschichtung beträgt 2,35 mg/cm².

### Beispiel 9

Die elektrochemischen Untersuchungen wurden an einer Halbzelle in Drei-Elektroden-Anordnung (stromlose Potentialmessung) durchgeführt. Die Elektrodenbeschichtung aus Beispiel 8 wurde als Arbeitselektrode eingesetzt, Lithium-Folie (Rockwood Lithium, Dicke 0,5 mm) als Referenz- und Gegenelektrode verwendet. Ein mit 100 µl Elektrolyt getränkter, 6-lagiger Vliesstoffstapel (Freudenberg Vliesstoffe, FS2226E) diente als Separator. Der verwendete Elektrolyt bestand aus einer 1-molaren Lösung von Lithiumhexafluorophosphat in einem 3:7 (v/v) Gemisch von Ethylencarbonat und Diethylcarbonat, welche mit 2 Gew.-% Vinylencarbonat versetzt war. Der Bau der Zelle erfolgte in einer Glovebox (< 1 ppm H₂O, O₂), der Wassergehalt in der Trockenmasse aller verwendeten Komponenten lag unterhalb von 20 ppm.

Die elektrochemische Testung wurde bei 20° C durchgeführt. Als Potentialgrenzen wurden 40 mV und 1,0 V vs. Li/Li⁺ verwendet. Das Laden bzw. Lithiieren der Elektrode erfolgte im cc/cv-Verfahren (constant current / constant voltage) mit konstantem Strom und nach Erreichen der Spannungsgrenze mit konstanter Spannung bis Unterschreiten eines Stroms von 50 mA/g. Das Entladen bzw. Delithiieren der Elektrode erfolgte im cc-Verfahren (constant current) mit konstantem Strom bis Erreichen der Spannungsgrenze. Der gewählte spezifische Strom bezog sich auf das Gewicht der Elektrodenbeschichtung.

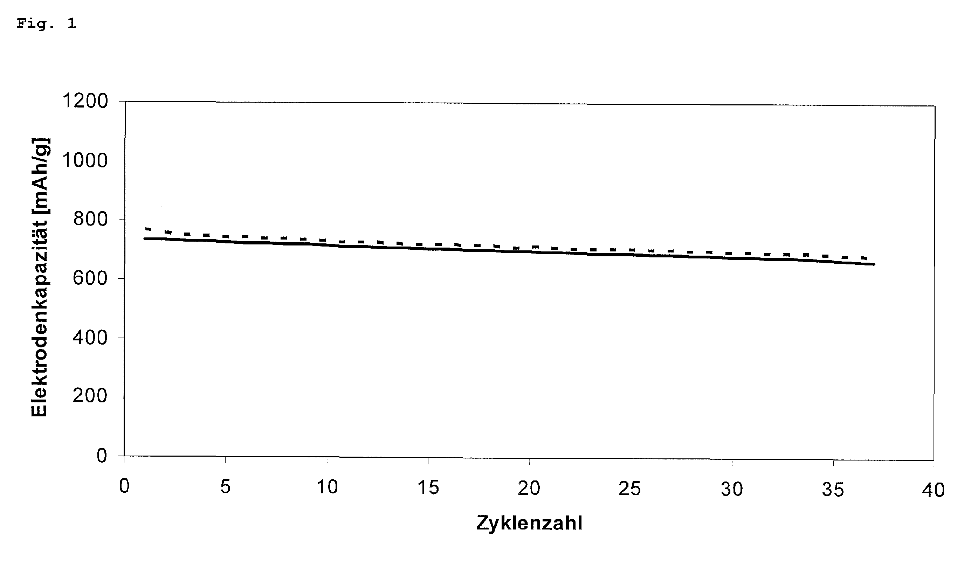

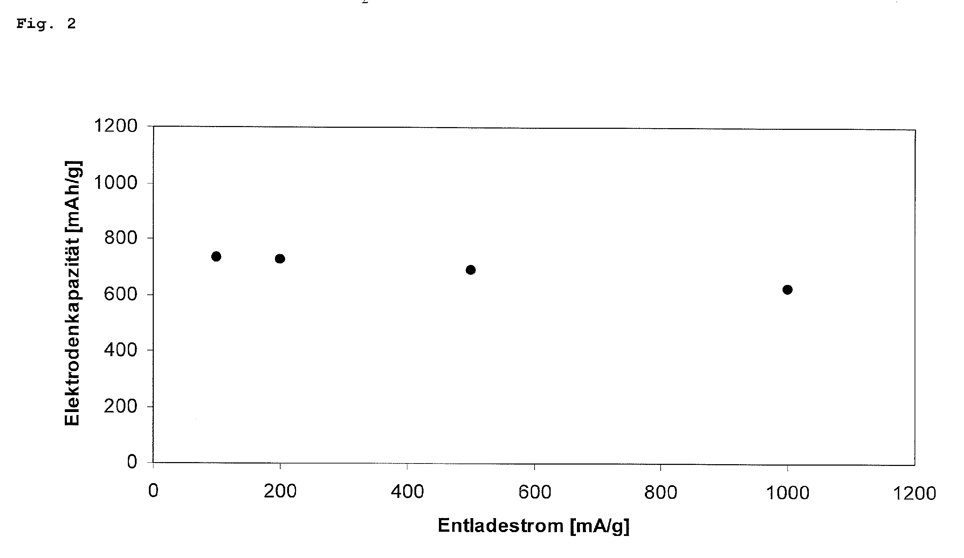

Nachfolgend wird auf die **Fig. 1** **und** **2** Bezug genommen.

**Fig. 1** zeigt die Lade- (gestrichelte Line) und Entladekapazität (durchgezogene Linie) der Elektrodenbeschichtung aus **Beispiel 8** in Abhängigkeit von der Zyklenzahl bei einem Strom von 100 mA/g.

Die Elektrodenbeschichtung aus **Beispiel 8** zeigt eine reversible Kapazität von etwa 700 mAh/g, was einer Kapazität des Kompositmaterials nach **Beispiel 4** von 875 mAh/g entspricht.

In **Fig. 2** ist die Entladekapazität der Elektrodenbeschichtung in Abhängigkeit vom Entladestrom bei konstantem Ladestrom von 100 mA/g dargestellt.

Die reversible Kapazität der Elektrodenbeschichtung nach **Beispiel 8** ist bis 1000 mA/g nahezu unabhängig vom vorgegebenen spezifischen Strom.

### Vergleichbeispiel 1 (nicht erfindungsgemäß)

2,00 g Silicium-Nanopulver (20-30 nm; Nanostructured & Amorphous Materials) wurden unter starkem Rühren in eine Lösung aus 16 ml Ethanol und 160 ml Wasser gegeben und 30 min im Ultraschallbad behandelt. Ammoniak-Lösung (32%, 625 µl) und Resorcin (1,60 g) wurden hinzugegeben, und die Dispersion wurde 30 min bei Raumtemperatur gerührt, bis alles Resorcin in Lösung gegangen ist. Formaldehyd Lösung (37 Gew.-% in Wasser mi 10 Gew.-% Methanol stabilisiert; 2,36 g) wurde hinzugegeben, und die Reaktionsmischung wurde erst 30 min bei 30 °C gerührt und anschließend noch 10 h auf 60 °C erwärmt. Nach dem Abkühlen auf Raumtemperatur wurden die Silicum-haltigen Partikel mittels Zentrifugation (5000 rpm, 30 min, 23 °C) vom Dispersionsmittel abgetrennt, in insgesamt 125 ml Ethanol redispergiert, nochmals zentrifugiert und mit 4x25 ml Ethanol gewaschen. Die vereinigten Partikel wurden bei 80 °C unter vermindertem Druck (3,5.10⁻² mbar) vom Lösungsmittel befreit, und der erhaltene feste Rückstand wurde 2 h im Vakuum getrocknet. Der braune Rückstand wurde in ein Quarzglasschiffchen gegeben und im Rohrofen unter Argon carbonisiert: Heizrate 5 °C/min, Temperatur 650 °C, Haltedauer 3 h, Ar-Flussrate 200 ml/min. Nach dem Abkühlen wurden 1,78 g eines schwarzen, pulverigen Feststoffs erhalten (Carbonisierungsausbeute 63%).

Elementare Zusammensetzung: Si 36 Gew.-%, C 42 Gew.-%, O 22 Gew.-%, Li <10 ppm, Fe 15 ppm, Al 39 ppm, Cu <10 ppm, Ca 15 ppm, K 17 ppm, Cl <3 ppm.

Spezifische Oberfläche (BET): 322 m²/g.

Das Si/C-Material aus **Vergleichsbeispiel 1** zeichnet sich im Gegensatz zu den erfindungsgemäßen **Beispielen 1-7** durch einen wesentlich höheren O-Gehalt aus (> 20 Gew.-%).

Durch die vorliegende Erfindung werden Si/C-Komposite als Anodenaktivmaterialien für Lithium-Ionen-Batterien zugänglich gemacht, die sich im Vergleich zum Stand der Technik durch eine Kohlenstoff-Matrix mit hoher Festigkeit und Elastizität auszeichnen und somit eine verbesserte Zyklenstabilität, vor allem im Vergleich zu einer physikalischen Mischung aus Silicium und Kohlenstoff vergleichbarer Zusammensetzung, aufweisen.

Dies wurde ermöglicht durch den Einsatz des natürlich vorkommenden Biopolymers Lignin als Precursor zur Erzeugung einer Kohlenstoff-Beschichtung bzw. -Matrix gegenüber etablierten C-Precursoren auf der Basis von Kohlenwasserstoffen, Kohlenhydraten oder organischen Polymeren, um die aktiven Siliciumhaltigen Partikel in Kohlenstoff einzubetten und damit elektrochemisch zu stabilisieren.

Überraschenderweise wurde gefunden, dass sich bei der Herstellung von Si/C-Kompositen aus Lignin als C-Precursor sowie der Verwendung der erhaltenen Materialien als Anodenaktivmaterialien in Lithium-Ionen-Batterien mehrere Vorteile im Vergleich zu anderen Si/C-Kompositen auf der Basis etablierter C-Precursoren ergeben.

Im Vergleich zu Kohlenwasserstoff-Precursoren, die meist in Form von hochgiftigen polyaromatischen Verbindungen auf der Basis von Pechen oder Teeren eingesetzt werden, ist Lignin als Naturstoff ungiftig und nicht an eine petrochemische Rohstoffquelle gebunden.

Weiterhin ist Lignin gut in polaren Lösungsmitteln wie z. B. Wasser/Alkohol-Mischungen löslich, wogegen etablierte Pech-Precursoren oft unlösliche Bestandteile erhalten und nur in Schmelze oder unpolaren Lösungsmitteln verarbeitet werden können, was in Herstellprozessen oft aufwendig und somit unerwünscht sein kann.

Im Vergleich zu C-Precursoren auf der Basis von Kohlenhydraten wie Zuckern und Cellulosen, die auch gut in polar-protischen Lösungsmitteln löslich und verarbeitbar sind, zeichnen sich Lignin und die aus Lignin erhaltenen Kohlenstoffe durch einen deutlich niedrigeren Sauerstoff-Gehalt aus, wodurch eine Oxidation der Silicium-Oberfläche im Komposit weitestgehend minimiert werden kann.

Vorteile gegenüber polymeren, thermoplastischen C-Precursoren (z. B. Vinylpolymere wie PVC) ergeben sich vor allem durch die deutlich höheren Kohlenstoff-Ausbeuten von Lignin bei der Carbonisierung.

Obwohl Lignin als hochverzweigtes Polyphenol viele strukturelle Analogien zu Phenol-bzw. Resorcin-Harzen aufweist, wird es jedoch im Gegensatz zu den genannten Harzen nicht aus petrochemischen Ausgangssubstanzen, sondern auf Basis pflanzlich nachwachsender Rohstoffe hergestellt und bietet daher eine nachhaltige, nicht auf Erdöl basierende und somit ressourcenschonende Alternative zu etablierten polymeren, duroplastischen C-Precursoren.

Der durch Carbonisierung von Lignin erzeugte feste, vernetzte und Sauerstoff-arme Kohlenstoff dient als stabilisierende Matrix, um die extreme Volumenexpansion des Siliciums bei der Beladung strukturell abzufangen und damit eine mechanische Zerstörung des Aktivmaterials sowie der Elektrodenstruktur unter Verlusten der Kapazität über mehrere Lade- und Entladezyklen zu minimieren.

Weiterhin schützt der Kohlenstoff die Oberfläche des Silicium-basierten Aktivmaterials vor Reaktionen mit anderen Bestandteilen der Elektrode bzw. der Batteriezelle und minimiert so zusätzlich Lithium-Verluste.

Daraus ergibt sich ein Si/C-Kompositmaterial, das sich gegenüber einer physikalischen Mischung aus Silicium und Kohlenstoff vergleichbarer Zusammensetzung durch deutlich verbessertes elektrochemisches Verhalten auszeichnet.

## Patentansprüche

1. Verfahren zur Herstellung eines Si/C-Komposits, umfassend Bereitstellen eines Aktivmaterials enthaltend Silicium, Bereitstellen von Lignin, Inkontaktbringen des Aktivmaterials mit einem C-Precursor enthaltend Lignin, und Überführen von Lignin in anorganischen Kohlenstoff bei einer Temperatur von wenigstens 400°C in einer inerten Gasatmosphäre.

2. Verfahren nach Anspruch 1, wobei das Aktivmaterial elementares Silicium, ein Siliciumoxid oder eine Silicium/Metall-Legierung umfasst.

3. Verfahren nach Anspruch 1 oder nach Anspruch 2, wobei das Aktivmaterial mikro- oder nanoskalige Siliciumpartikel umfasst, vorzugsweise nanoskalige Si-Partikel mit einer durchschnittlichen Partikelgröße von weniger als 500 nm.

4. Verfahren nach einem der Ansprüche 1 bis 3, wobei das Aktivmaterial und der C-Precursor dadurch in Kontakt gebracht werden, dass sie vermahlen oder physikalisch vermischt werden.

5. Verfahren nach einem der Ansprüche 1 bis 3, wobei das Inkontaktbringen von Aktivmaterial und C-Precursor dadurch erfolgt, dass das Aktivmaterial in eine Dispersion oder Lösung von Lignin dispergiert und durch anschließende Entfernung des Lösungsmittels mit Lignin beschichtet bzw. in Lignin eingebettet wird.

6. Verfahren nach Anspruch 3, wobei das Inkontaktbringen von Aktivmaterial und C-Precursor dadurch erfolgt, dass mittels chemischer oder thermischer Gasphasenabscheidung Siliciumpartikel auf dem C-Precursor oder der C-Precursor auf den Siliciumpartikeln abgeschieden werden.

7. Verfahren nach einem der Ansprüche 1 bis 6, wobei die Carbonisierung durch Aufheizen auf eine Zieltemperatur von 400-1400 °C, thermische Behandlung bei jener Zieltemperatur für wenigstens 30 Minuten und anschließende Abkühlung erfolgt.

8. Si/C-Komposit, enthaltend 10-90 Gew.-% Silicium und 10-90 Gew.-% Kohlenstoff, mit einer durchschnittlichen Größe von kleiner als 1 mm, wobei der Kohlenstoff wenigstens teilweise aus Lignin stammt.

9. Si/C-Komposit, hergestellt durch ein Verfahren nach einem der Ansprüche 1 bis 7, enthaltend 10-90 Gew.-% Silicium und 10-90 Gew.-% Kohlenstoff, mit einer durchschnittlichen Größe von kleiner als 1 mm.

10. Si/C-Komposit nach Anspruch 8 oder nach Anspruch 9, umfassend mit Kohlenstoff beschichtete Siliciumpartikel.

11. Si/C-Komposit nach einem der Ansprüche 8 bis 10, enthaltend eine Kohlenstoffmatrix, in die Siliciumpartikel eingebettet sind.

12. Anodenmaterial für eine Lithium-Ionen-Batterie, enthaltend ein Si/C-Komposit nach einem der Ansprüche 8 bis 11.

13. Verfahren zur Herstellung einer Anode für eine Lithium-Ionen-Batterie, umfassend Verarbeitung des Anodenmaterials nach Anspruch 12 zu einer Tinte oder Paste mit einem Feststoffgehalt von 5-95 Gew.-%, Aufbringen der Tinte oder Paste in einer Trockenschichtdicke von 2 - 500 µm auf einen Stromsammler, Trocknen der Tinte oder Paste auf dem Stromsammler bei einer Temperatur von 20-300 °C, wobei der Anteil des Anodenmaterials in Bezug auf das Trockengewicht der Tinte oder Paste 5 - 98 Gew.-% beträgt.

14. Verfahren nach Anspruch 13, wobei das Anodenmaterial mit einem oder mehreren Bestandteilen ausgewählt aus der Gruppe bestehend aus Graphit, Lithium, Bindemitteln, Leitruß, Kohlenstoffnanoröhren, Metallpulver, Dispergiermittel, Porenbildner und Lösungsmittel, zu einer Tinte oder Paste verarbeitet wird.

15. Lithium-Ionen-Batterie, umfassend eine Kathode, eine Anode, eine zwischen Kathode und Anode angeordnete Membran als Separator, einen Lithium-Ionen enthaltenden Elektrolyten, wobei die Anode ein Anodenmaterial nach Anspruch 12 enthält.
